# NEW EUROPEAN PATENT SPECIFICATION

(11) **EP 0 759 826 B2**
(45) Date of publication and mention of the opposition decision: **22.10.2008**
(45) Mention of the grant of the patent: 31.07.2002
(21) Application number: 95921204.4
(22) Date of filing: 24.05.1995
(51) Int. Cl.: B23B 7/16, B23B 29/04

(54) **TOOL HOLDER WITH A CLAMP FOR APERTURED INSERTS**
WERKZEUGHALTER MIT SPANNEINRICHTUNG FÜR SCHNEIDEINSÄTZEN MIT OFFNUNGEN
PORTE-OUTIL A BRIDE DE FIXATION POUR PLAQUETTES AMOVIBLES A OUVERTURE

(30) Priority: 27.05.1994 SE 9401822
(43) Date of publication of application: 05.03.1997
(73) Proprietor: SANDVIK AKTIEBOLAG, 811 81 Sandviken (SE)
(72) Inventor: TJERNSTRÖM, Eric, S-802 67 Gävle (SE)
(74) Representative: Lieke, Winfried
(86) International application number: PCT/SE1995/000595
(87) International publication number: WO 1995/032829

(56) References cited:
- EP-A- 0 402 934
- DE-A- 3 709 135
- DE-A- 4 209 084
- SU-A- 1 565 593
- US-A- 3 577 618
- US-A- 3 837 058

## Description

The present invention relates to a combination of a toolholder and a cutting insert according to the preamble of claim 1 and as known from e.g. SU 1565593. A toolholder of this kind is for centrally apertured indexable inserts intended for chipforming machining of metallic workpieces.

Indexable inserts are usually provided with nose point angles below 60° and they are usually intended for copying machining. There exist a variety of toolholders for various types of indexable inserts with nose point angles of 55° such as rhombic, rhomboidic and triangular inserts with equal angles all around the insert. The material used for such inserts is normally cemented carbide material or ceramic material.

A commonly used locking system for such indexable inserts includes a pin in the holder extending upwardly into the insert-receiving pocket to engage a hole in the insert located in said pocket, and means for forcing said pin to be subjected to a pivoting movement inwardly towards said holder, said forcing means being arranged to actuate the lower portion of said pin, thus urging both the pin and the insert inwards towards an upwardly extending wall formed on said holder rearwardly of said pocket. Such type of toolholder is disclosed in US-Patent 3,314,126. The drawback of such holder, however, is that the forward nose portion of the cutting insert has a tendency of coming apart from the shim plate located underneath said insert which sometimes can lead to insert failure.

The document EP-A-0402934 discloses a toolholder for indexable inserts by using a screw-actuated clamp with a forward and a rear projection, wherein the forward projection engages with a central hole of the insert. The present invention is based on the idea that the insert can be put more stably against its side support surface in the holder by arranging for point contact between said hole wall of the insert and said front clamp projection at a point distantly provided from the top face of the insert whilst leaving the upper portion of said front clamp projection out of contact with said insert hole wall.

In view thereof it is an object of the invention to provide a novel arrangement for clamping the insert in place in the pocket which will ensure that a clamp is acting on both the top surface and in the central hole wall of the insert in such a way that both downwardly and laterally acting clamp forces will keep the insert firmly and safely in place in its location without any tendency of coming apart from its underneath supporting surface.

According to the invention, a combination of a toolholder and a cutting insert is provided having the features of claim 1.

In accordance with a preferred embodiment of the invention the rear end portion of the clamp is adapted to come into abutment with a forwardly and upwardly inclined cam surface provided on the holder body.

The invention will now be described more in detail by reference to the enclosed drawings which illustrate a preferred embodiment of the invention.

Fig. 1 is a side view of a combination of a toolholder and a cutting insert according to the invention wherein however, the protrusion of the clamp does not have an axis of symmetry.

Fig. 2 is a plan view of the toolholder shown in Fig. 1.

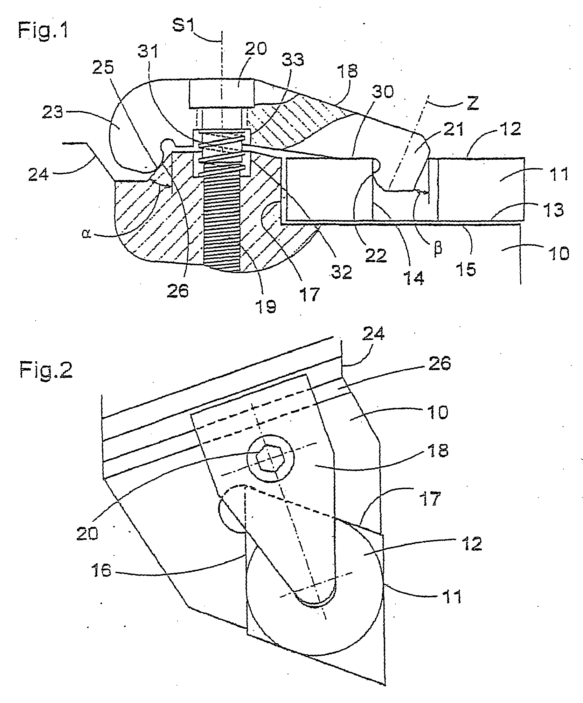

In Figs. 1-2 there is shown a portion of a cutting tool for turning operations comprising a partially shown toolholder 10 for left hand turning the forward nose portion of which is provided with a pocket for the receipt of an indexable cutting insert 11 of polygonal shape. This insert has rhombic basic shape with nose point angles less than 60°. The insert has an upper flat surface 12 and a lower flat surface 13 parallel with said upper surface. The insert has four side surfaces extending perpendicularly towards said upper and lower flat surfaces 12, 13, two of which are arranged to come into surface abutment with two upstanding support surfaces 16 and 17 of the insert receiving pocket whereas said lower flat surface 13 is intended to rest against a bottom supporting surface 15 of said insert-receiving pocket. The central hole of the insert is designated 14. The bottom supporting surface 15 could either be a partial surface portion of the holder itself or be provided as a separate shim plate in the insert-receiving pocket of said holder.

There is a clamp 18 provided for the clamping of the insert into its pocket in the holder 10, said clamp being actuatable by means of a clamp screw 20 that extends entirely through said clamp and threadably engages a bore 19 in the holder 10, the central axis S1 of said screw extending parallel with the central axis of the hole 14 in the insert. The forward end of said clamp is in the shape of a downward-inwards inclined first protrusion 21 intended to engage with the inwardly towards said holder directed hole wall of said hole 14 at a contact point 22 at a distance downwardly from the upper surface 12 of the insert. The opposite end of said clamp is in the shape of a second protrusion 23 that is received in a recess 24 in the holder 10, the end surface 25 of said protrusion 25 being in the form of a flat surface or preferably in the shape of two laterally spaced convex surfaces for surface abutment with a planar contact surface 26 in said recess 24 that is inclined at an angle α in relation to the central axis S1 of the clamp screw 20.

With the embodiment shown in Fig. 1-2 the forward end of the clamp 18 is made in the shape of a protrusion 21 that has an axis of symmetry Z that extends downwards-inwards at an angle β that is substantially equal to or somewhat smaller than the angle α. The toolholder in Fig. 1-2 is furthermore provided with a helical spring 31 so that the clamp is pressed upwards upon loosening the screw 20. The spring 31 is partially received in a cylindrical counterbore 32 in the holder body and partially received in a similar cylindrical counterbore 33 in the underneath portion of the clamp.

Upon actuating the clamp 18 by threadably tightening the screw 20 the clamp 18 is pressed downwards, thus urging the surface or the laterally spaced surfaces 25 to slide downwards-inwards along contact surface 26 at the same time as the underneath clamp surface 30 is brought in planar surface abutment with said top surface 12 whilst said forward protrusion 21 engages the insert hole 14 at a downwardly located point 22 distantly from said top surface 12. Thanks to providing said inclined surface 26 at an angle α a favorable wedging action is achieved which ensures providing effective vertical and lateral clamping forces acting on said insert. The size of the angle α should be selected in the range 15 to 50 degrees, preferably within the range 20 to 40 degrees.

## Claims

1. Combination of a tool holder and a cutting insert, said tool holder (10) being provided for holding said cutting insert (11) in a pocket confined by a bottom surface (15) and at least one side surface (17) upstanding from said bottom surface (15), said insert having top and bottom faces, a through hole (14) and edge faces intersecting said top and bottom face, said tool holder comprising a clamp (18) with forward and rear protrusions mounted on said tool holder (10) for being actuated against said insert (11) by means of a clamping screw (20) extending entirely through a recess (28) of said clamp (18) whilst threadably engaging a bore in said tool holder (10), wherein the forward end portion of said clamp is in the shape of a downward-inwards inclined protrusion (21) having a contact surface to be engaged with the hole wall of said hole (14) and the rear end portion (23) of the clamp is arranged to be in abutment with a planar contact surface (26) on the holder (10), which surface is inclined at an angle α with respect to the axis (S₁) of the clamping screw for providing a wedging action, wherein the forward protrusion (21) of the clamp (18) is a portion having an axis of symmetry that is oriented at an inclined angle β relative to the axis of the hole (14) the letter axis being parallel to the axis (S₁) of the clamping screw, and that said forward protrusion (21) includes a contact surface facing the upstanding side surface (17) at a point distantly provided from the top face (12) of the insert such that, upon tightening said screw (20) said protrusion makes contact only with said point of said wall (14) distantly from said top face (12) **characterized in that** said insert is an indexable insert having a center through hole and **in that** upon lightening said screw a planar underneath surface of the clamp (18) only makes surface contact with the upper surface of said insert at a location between said hole (14) and the edge surface contacting said upstanding side surface (17) in the tool holder, and **in that** the angle β is essentially of same size or somewhat smaller than the acute angle α at which the contact surface (26) is oriented.

2. Combination of a tool holder and a cutting insert as defined in claim 1, **characterized in that** the size of the angle (α) is 20-40 degrees.

3. Combination of a tool holder and a cutting insert as defined in claim 1, **characterized in that** the rear protrusion of the clamp (18) has a convex surface to come into abutment with the inclined contact surface (6) of the holder (10).

4. Combination of a tool holder and a cutting insert as defined in claim 3, **characterised in that** the rear contact surface of the clamp consists of two laterally spaced surfaces (25) of the clamp (18) each convex in shape.

## Patentansprüche

1. Kombination aus einem Werkzeughalter und einem Schneideinsatz, wobei der Werkzeughalter (10) zum Halten des Schneideinsatzes (11) in einer Tasche, die durch eine Bodenfläche (15) und mindestens eine Seitenfläche (17), die von der Bodenfläche (15) hochsteht, begrenzt ist, bereitgestellt wird, wobei der Einsatz obere und untere Flächen, ein mittiges, durchgehendes Loch (14) und Kantenflächen hat, welche die obere und die untere Fläche schneiden, wobei der Werkzeughalter eine Spanneinrichtung (18) aufweist mit vorderen und hinteren Vorsprüngen, die Spanneinrichtung auf dem Werkzeughalter (10) angebracht ist, um gegen den Einsatz (11) mittels einer Spannschraube (20) betätigt zu werden, die sich ganz durch eine Ausnehmung (28) der Spannvorrichtung (18) erstreckt, während sie mit einer Bohrung in dem Werkzeughalter (10) in Gewindeeingriff steht, wobei der vordere Endabschnitt der Spanneinrichtung die Form eines nach unten und einwärts geneigten Vorsprunges (21) hat mit einer Kontaktfläche, die mit der Lochwand des Loches (14) in Eingriff kommen soll, und der hintere Endabschnitt (23) der Spanneinrichtung so angeordnet ist, daß er mit einer ebenen Kontaktfläche (26) auf dem Halter (10) in Widerlage kommt, wobei die Oberfläche in Bezug auf die Achse (S₁) der Spannschraube unter einem Winkel α geneigt ist, um eine Keilwirkung bereitzustellen, wobei der vordere Vorsprung (21) der Spanneinrichtung (18) ein Teil mit einer Symmetrieachse ist, die unter einem Neigungswinkel β zur Achse des Loches (14) ausgerichtet ist, welche parallel zur Achse (S₁) der Spannschraube ist, und daß der vordere Vorsprung (21) eine Kontaktfläche aufweist, welche der hochstehenden Seitenfläche (17) an einer Stelle zugewandt ist, die im Abstand von der oberen Fläche (12) des Einsatzes vorgesehen ist, derart, daß beim Festziehen der Schraube (20) der Vorsprung Berührung nur mit der Stelle der Wand (14) macht, die von der oberen Fläche (12) im Abstand angeordnet ist, **dadurch gekennzeichnet, daß** der Einsatz ein Wendeeinsatz mit einem mittigen, durchgehenden Loch ist und daß auf Festziehen der Schraube eine ebene untere Fläche der Spanneinrichtung (18) nur Oberflächenkontakt mit der oberen Fläche des Einsatzes an einem Ort zwischen dem Loch (14) und der Kantenfläche macht, welche die hochstehende Seitenfläche (17) in dem Werkzeughalter berührt, und daß der Winkel β im wesentlichen gleich groß oder etwas kleiner ist als der spitze Winkel α, unter welchem die Kontaktfläche (26) ausgerichtet ist.

2. Kombination aus einem Werkzeughalter und einem Schneideinsatz nach Anspruch 1, **dadurch gekennzeichnet, daß** die Größe des Winkels (α) 20 - 40 Grad beträgt.

3. Kombination aus einem Werkzeughalter und einem Schneideinsatz nach Anspruch 1, **dadurch gekennzeichnet, daß** der hintere Vorsprung der Spanneinrichtung (18) eine konvexe Kontaktfläche hat, um mit der geneigten Kontaktfläche (26) des Halters (10) in Widerlage zu kommen.

4. Kombination aus einem Werkzeughalter und einem Schneideinsatz nach Anspruch 3, **dadurch gekennzeichnet, daß** die hintere Kontaktfläche der Spanneinrichtung aus zwei seitlich im Abstand angeordneten Flächen (25) der Spanneinrichtung (18) besteht, deren jede konvexe Form hat.

## Revendications

1. Porte-outil (10) destiné à maintenir une plaquette de coupe (11) dans une poche limitée par une surface inférieure (15) et au moins une surface latérale (17) se dressant depuis ladite surface inférieure (15), ladite plaquette comportant des faces supérieure et inférieure, un trou traversant central (14) et des faces d'arêtes recoupant lesdites faces supérieure et inférieure, ledit porte-outil comprenant une bride de fixation (18) avec des saillies avant et arrière montées sur ledit porte-outil (10) en vue d'être mises en oeuvre contre ladite plaquette (11) au moyen d'une vis de serrage (20) s'étendant entièrement au travers d'un évidement (28) de ladite bride de fixation (18), tout en mettant en prise par filetage un alésage dans ledit porte-outil (10), dans lequel la partie d'extrémité avant de ladite bride de fixation est sous la forme d'une saillie (21) inclinée vers le bas et vers l'intérieur présentant une surface de contact devant être mise en prise avec la paroi de trou dudit trou (14), et la partie d'extrémité arrière (23) de la bride de fixation est agencée pour être en contact avec une surface de contact plane (26) sur le support (10), laquelle surface est inclinée à un angle α par rapport à l'axe (S₁) de la vis de serrage pour fournir une action de coincement, dans lequel la saillie avant (21) de la bride de fixation (18) est une partie présentant un axe de symétrie qui est orienté à un angle incliné β par rapport à l'axe du trou (14), le dernier axe étant parallèle à l'axe (S₁) de la vis de serrage, et que ladite saillie avant (21) comprend une surface de contact faisant face à la surface latérale verticale (17) au niveau d'un point disposé à distance de la face supérieure (12) de la plaquette de sorte que, lors du serrage de ladite vis (20), ladite saillie réalise un contact uniquement avec ledit point de ladite paroi (14) à distance de ladite face supérieure (12), **caractérisé en ce que** ladite plaquette est une plaquette amovible présentant un trou traversant central et **en ce que** lors du serrage de ladite vis une partie de la surface de dessous de la bride de fixation (18) réalise uniquement un contact de surfaces avec la surface supérieure de ladite plaquette au niveau d'un emplacement entre ledit trou (14) et la surface de bord en contact avec ladite surface latérale verticale (17) dans le porte-outil, et **en ce que** l'angle β présente pratiquement la même valeur ou une valeur quelque peu inférieure à celle de l'angle aigu α selon lequel la surface de contact est orientée.

2. Porte-outil selon la revendication 1, **caractérisé en ce que** la valeur de l'angle α est de 20 à 40 degrés.

3. Porte-outil selon la revendication 1, **caractérisé en ce que** la saillie arrière de la bride de fixation (18) présente une surface de contact convexe pour venir en contact avec la surface de contact inclinée (26) du support ( 10).

4. Porte-outil selon la revendication 3, **caractérisé en ce que** la surface de contact arrière de la bride de fixation est constituée de deux surfaces espacées latéralement (25) de la bride de fixation (18), chacune étant de forme convexe.
